# EUROPEAN PATENT APPLICATION

(11) **EP 1 614 395 A1**
(43) Date of publication of application: **11.01.2006**
(21) Application number: 05106114.1
(22) Date of filing: 06.07.2005
(51) Int. Cl.: A61C 1/14, B23B 31/20

(54) **Clamping device and dental handpiece including same**

(30) Priority: 08.07.2004 IL 16294004
(71) Applicant: Cohen, Yechiel, Carmiel 21861 (IL)
(72) Inventor: Cohen, Yechiel, Carmiel 21861 (IL)
(74) Representative: Weydert, Robert

(57) **Abstract**

A clamping device for clamping a member to a housing includes a sleeve unit carried by the housing and having an open end formed with a tapered inner surface; and a chuck unit receivable within the open end of the sleeve unit, the chuck unit having an open end which is radially contractible for receiving and clamping the member. The chuck unit is movable axially in one direction to a clamping position, or in the opposite direction to a releasing position. The sleeve unit and chuck unit include interengaging elements such that rotation of the sleeve unit in opposite directions relative to the chuck unit moves the chuck unit to its clamping and releasing positions, respectively. A spring normally urges the sleeve unit to its clamping position. A manual operator rotates the sleeve unit in the opposite direction to move the chuck unit to its releasing position.

## Description

### FIELD AND BACKGROUND OF THE INVENTION

The present invention relates to clamping devices for clamping a member to a housing. The invention is particularly useful in dental handpieces for releasably clamping dental tools, and is therefore described below with respect to this application.

One form of dental handpiece to which the invention is especially suitable is the air turbine handpiece for driving a dental tool, such as a burr or drill, at extremely high speeds, e.g., in the order of 400,000 rpm. The clamping devices now commonly used in such dental handpieces are generally of a relatively bulky construction which increases the size and weight of the handpiece, and/or require relatively awkward manipulations in order to remove and insert the dental tool with respect to the handpiece.

My prior U.S. Patents 5,549,474 and 5,810,588 (corresponding to Israel Patents 107202 filed October 6, 1993) disclose clamping devices particularly useful for dental handpieces having advantages in the above respects.

### OBJECTS AND BRIEF SUMMARY OF THE PRESENT INVENTION

An object of the present invention is to provide a novel clamping device, and particularly a novel dental handpiece, for manually clamping and releasing a dental tool or other member in a manner which is convenient to perform and which requires relatively little force.

According to one aspect of the present invention, there is provided a clamping device for clamping a member to a housing, comprising:
a sleeve unit carried by the housing and having an open end formed with a tapered inner surface;
a chuck unit receivable within the open end of the sleeve unit, the chuck unit having an open end which is radially contractible for receiving and clamping the member;
the chuck unit being movable axially in one direction to a clamping position wherein its open end is contracted by engagement with the tapered inner surface of the sleeve unit, or in the opposite direction to a releasing position wherein its open end is moved away from the tapered inner surface of the sleeve unit;
the sleeve unit and chuck unit including interengaging elements such that rotation of the sleeve unit in one direction relative to the chuck unit moves the chuck unit to its clamping position, and rotation of the sleeve unit in the opposite direction relative to the chuck unit axially moves the chuck unit to its releasing position;
a spring normally urging the sleeve unit in the one rotary direction to thereby move the chuck unit to its clamping position;
and a manual operator effective, when manually actuated, to rotate the sleeve unit in the opposite direction to thereby move the chuck unit to its releasing position.

According to further features in the described preferred embodiment, the manual operator is a push button which, in its normal position, permits the spring to urge the chuck unit to its clamping position, and which is depressible to rotate the sleeve unit in the opposite direction to thereby move the chuck unit to its releasing position.

According to further features in the described preferred embodiment, the manual operator includes a first element engageable with the chuck unit upon the initial actuation of the manual operator to hold the chuck unit against rotation, and a second element engageable with the sleeve unit, upon the continued actuation of the manual operator, to rotate the sleeve unit, relative to the chuck unit, in the opposite direction to thereby move the chuck unit to the releasing position.

In two described preferred embodiments, the spring is a spiral leaf spring, or a helical spring, normally urging the sleeve unit in the one rotary direction to thereby move the chuck unit to its clamping position.

According to another aspect of the present invention, there is provided a dental handpiece including a clamping device as set forth above for releasably clamping a dental tool.

As will be described more particularly below, such a clamping device, particularly when used in a dental handpiece, permits the operator to change dental tools in a quick, convenient, and relatively effortless manner.

Further features and advantages of the invention will be apparent from the description below.

### BRIEF DESCRIPTION OF THE DRAWINGS

The invention is herein described, by way of example only, with reference to the accompanying drawings, wherein:
Fig. 1 is a side elevational view illustrating one form of dental handpiece constructed in accordance with the present invention;
Fig. 2 is an enlarged, longitudinal sectional view illustrating the main components in the dental handpiece of Fig. 1;
Fig. 3 is a transverse sectional view along line III - III of Fig. 2;
Fig. 4 is a pictorial illustration of the sleeve unit in the dental handpiece of Figs. 1 - 3;
Fig. 5 is a pictorial illustration of the chuck unit in the dental handpiece of Figs. 1 - 3;
Fig. 6 is a pictorial illustration, generally from the front side, of the dental handpiece of Figs. 1 - 3 with the housing and a part of the sleeve unit removed to better show the internal structure;
Fig. 7 is a pictorial illustration of the assembly illustrated in Fig. 4 but viewed generally from the rear;
Fig. 8 is a pictorial illustration of the push button assembly in the dental handpiece of Figs. 1 - 3; and
Fig. 9 is a sectional view illustrating a modification in the construction of the dental handpiece.

It is to be understood that the foregoing drawings, and the description below, are provided primarily for purposes of facilitating understanding the conceptual aspects of the invention and various possible embodiments thereof, including what is presently considered to be a preferred embodiment. In the interest of clarity and brevity, no attempt is made to provide more details than necessary to enable one skilled in the art, using routine skill and design, to understand and practice the described invention. It is to be further understood that the embodiments described are for purposes of example only, and that the invention is capable of being embodied in other forms and applications than described herein.

### DESCRIPTION OF A PREFERRED EMBODIMENT

As indicated above, the clamping device of the present invention is particularly useful in dental handpieces for releasable clamping a dental tool in a manner which permits the dental tool to be readily removed and replaced by another one. The drawings, therefore, illustrate a dental handpiece including a clamping device constructed in accordance with the present invention.

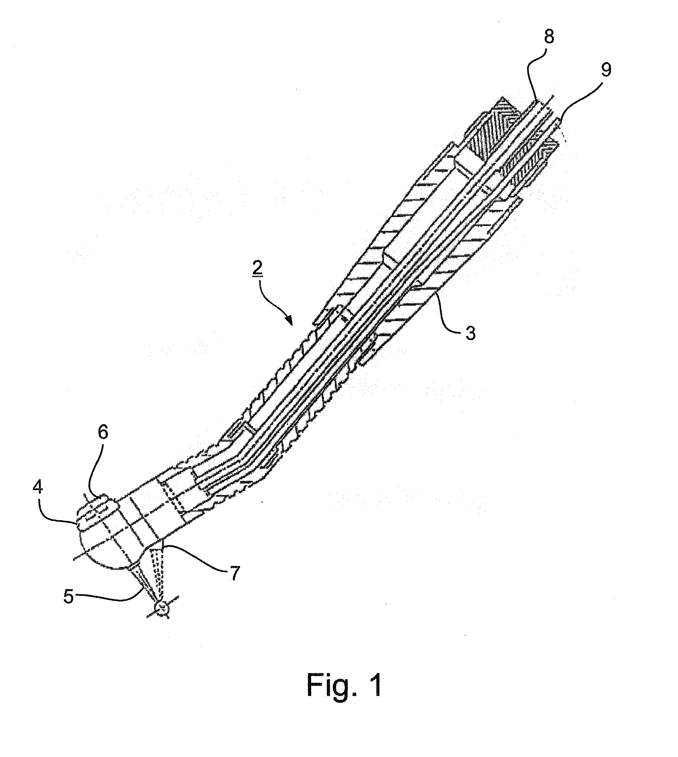

The dental handpiece illustrated in Fig. 1 includes a housing, generally designated 2, having a hand-gripping section 3 at one end, and a tool-holding section 4 at the opposite end for holding a dental tool 5, such as a burr or drill. Housing section 4 further carries a push button 6 which is depressible in order to release dental tool 5 and to permit attachment of another dental tool in a quick and convenient manner. Housing section 4 further includes a water spray nozzle 7 for discharging a water spray onto the site being worked by the dental tool 5.

The illustrated dental handpiece, as to be described more particularly below, is an air turbine handpiece in which compressed air is supplied, via a conduit 8 at the back end of the handpiece, to an air turbine within housing section 4 to rotate the dental tool 5 at a very high speed, e.g., in the order of 400,000 rpm. The rear end of the dental handpiece includes a further conduit 9 for introducing water which is discharged in the form of a spray via nozzle 7 onto the working site of the dental tool.

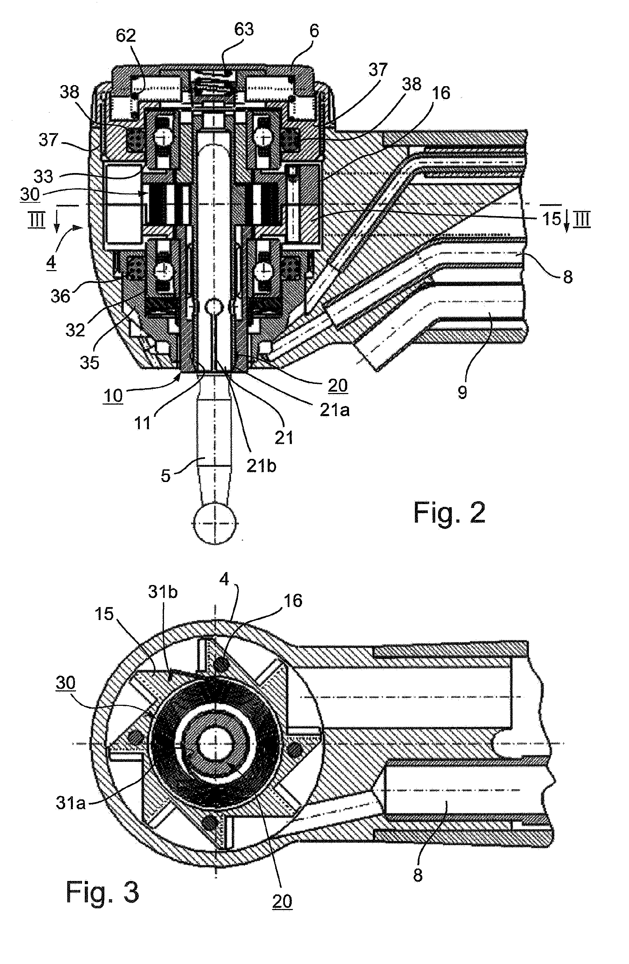

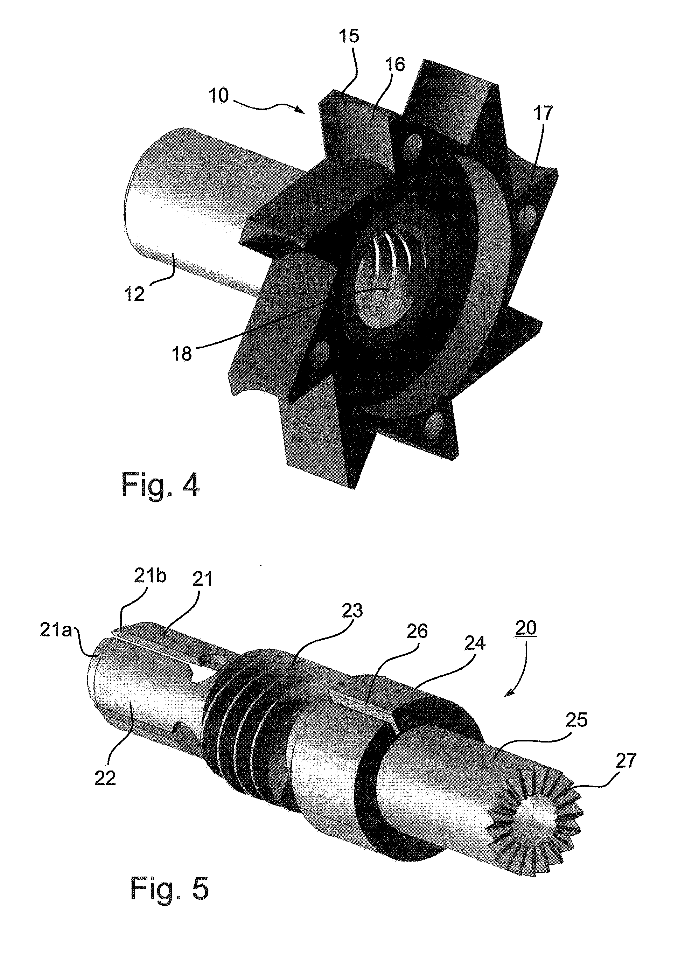

As shown particularly in Fig. 2, housing section 4 houses a sleeve unit, generally designated 10, having an open end formed with a tapered inner surface 11, and a chuck unit, generally designated 20, having an open end 21 formed with a tapered outer surface 21a and a plurality of axial slits 21b so as to be radially contractible for receiving and clamping the dental tool 5. Sleeve unit 10 is more particularly shown in Fig. 4, and chuck unit 20 is more particularly shown in Fig. 5. As will be described below, chuck unit 20 is movable axially with respect to sleeve unit 10 in a first direction to a clamping position wherein its slitted open end 21 is contracted by engagement with tapered inner surface 11 of the sleeve unit, or in the opposite direction to a releasing position wherein its slitted open end 21 is moved away from tapered inner surface 11. As will also be described below. The sleeve unit 10 and chuck unit 20 include interengaging elements such that rotation of the sleeve unit in one direction relative to the chuck unit 20, axially moves the chuck unit to its clamping position; and rotation of the sleeve unit 10 in the opposite direction relative to the chuck unit, axially moves the chuck unit to its releasing position.

The dental tool further includes a spring, generally designated 30, urging the sleeve unit 10 in the one rotary direction to thereby move chuck unit 20 to its clamping position. Push button 6 serves as a manual operator effective, when manually actuated (depressed), to rotate sleeve unit 10 in the opposite rotary direction to thereby move chuck unit 20 to its releasing position.

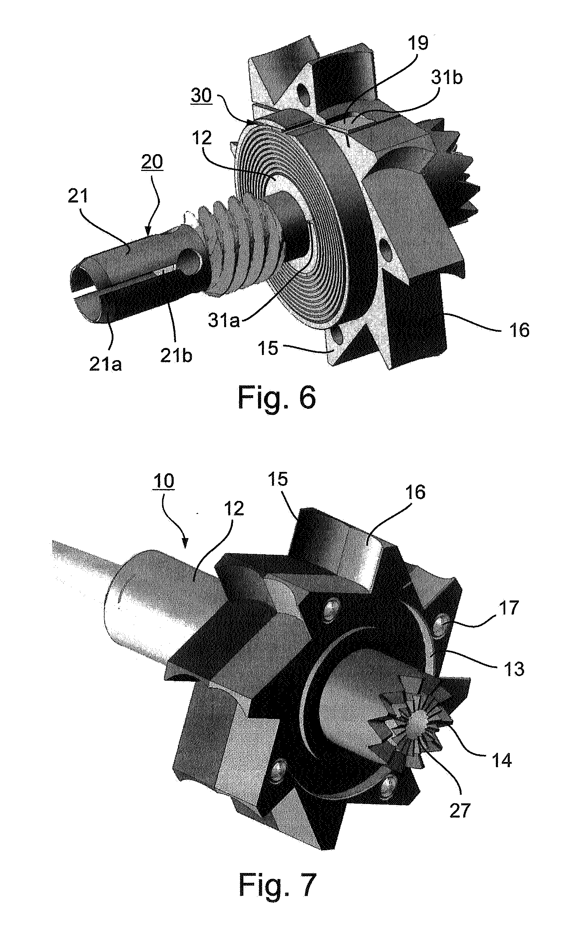

Sleeve unit 10, as best seen in Fig. 7, includes a front tubular section 12 and a rear tubular section 13. The front tubular section 12 is formed with the previously mentioned tapered inner surface 11 (Fig. 2), whereas the rear tubular section 13 is formed with axially-extending teeth 14 for a purpose to be described below. The confronting faces of the two tubular sections 12, 13, are formed with blades, 15, 16 secured together by a plurality of fasteners 17, joining the two sections together as a unit with blades 15, 16 serving as turbine blades. In addition, the inner surface of the front tubular section 12 is formed with internal threads 18 (Fig. 4) which serve as the previously-mentioned interengaging elements cooperating with complementary elements (threads) in the chuck unit 20, to move the chuck unit axially upon the rotation of the sleeve unit 10 relative to the chuck unit, to the clamping and releasing positions of the chuck unit.

As shown particularly in Fig. 6, spring 30 is a spiral leaf spring enclosing tubular section 12 of the sleeve unit 10 just forwardly of its blades 15, 16. The inner end 31a of spiral spring 30 is coupled to chuck unit 20, as will be described more particularly below, whereas the outer end 31b of the spiral spring is fixed within a recess 19 formed in one of the blades 15.

The chuck unit 20, as best seen in Fig. 5, also includes a front tubular section 22 formed with the previously-mentioned slits 21 so as to be radially contractible by the tapered inner surface 11 of the sleeve unit 10 upon axial movement of the chuck unit with respect to the sleeve unit. Tubular section 22 of chuck unit 20 is further formed with external helical threads 23 rearwardly of the slits 21b, such as to be receivable within internal threads 18 of sleeve unit 10 when the chuck unit is received within the sleeve unit.

As further seen in Fig. 5, chuck unit 20 includes a larger-diameter tubular section 24 rearwardly of the external thread 23, and a rear tubular section 25 of substantially the same diameter as the front tubular section 22. The larger-diameter section 24 of chuck unit 2 is formed with an axially-extending slot 26 for receiving the inner end 31a of spring 30. The outer end of the rear tubular section 25 of chuck unit 20 is formed with a plurality of axially-extending teeth 27 for a purpose to be more particularly described below.

As seen particularly in Fig. 2, chuck unit 20 is received within sleeve unit 10, and spiral spring 30 is received around the large-diameter section 24 of chuck unit 20,with the inner end 31a of spiral spring 30 received within slot 26 of the chuck unit 20, and the outer end 31b of the spiral spring secured within recess 19 of the sleeve unit. Spring 30 thus couples sleeve unit 10 to chuck unit 20 to defme a unitary assembly. This assembly is rotatably mounted within housing section 6 by a front ball-bearing 32 enclosing the front tubular section 12 of sleeve unit 10, and a rear ball-bearing 33 enclosing the rear tubular section 13 of the sleeve unit.

Housing section 4 further includes a front collar 35 enclosing the front ball-bearing assembly 32 and sealed therefrom by an annular sealing ring 36, and a rear collar 37 enclosing the rear ball-bearing assembly 33 and sealed therefrom by a sealing ring 38.

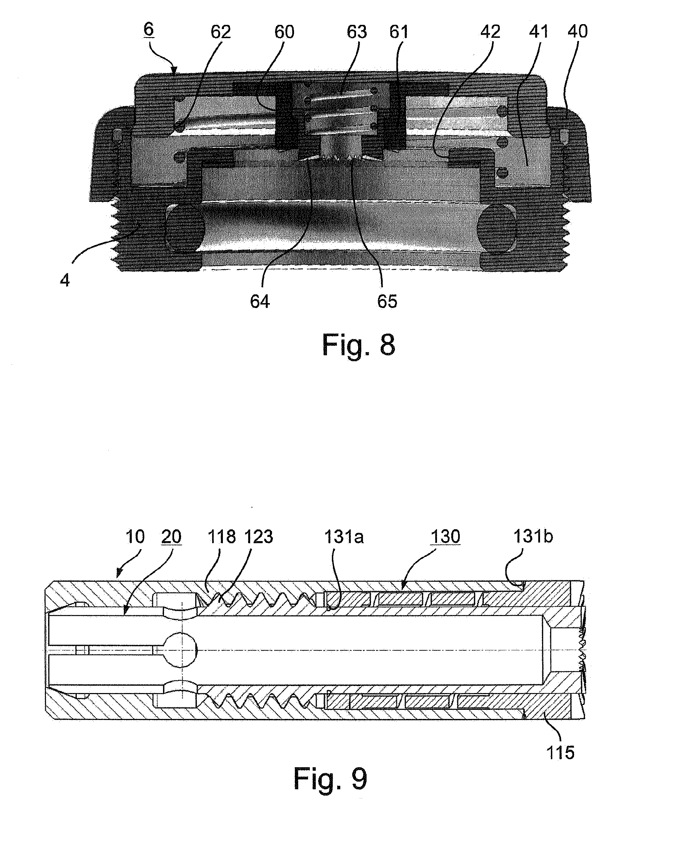

Push button 6 closes the rear end of housing section 4. As shown particularly in Figs. 2 and 8, the rear end of housing section 4 is closed by a threaded cap 40 formed with an annular space 41 for receiving cap 6, and with a large center opening 42 for accommodating elements of the cap when manually depressed, as will be described more particularly below.

Push button 6 includes an outer hollow stem 60 and an inner hollow stem 61 telescopingly received within the outer hollow stem. Push button 6 is urged outwardly by a spring 62 between the push button and the end wall of housing section 4; whereas the inner hollow stem 61 is urged outwardly of the push button by a second spring 63 between the inner stem and the push button. In the projected position of the inner stem 61, as shown in Fig. 8, it projects outwardly of the outer stem 60.

As also shown in Fig. 8, the outer end of the outer stem 60 is formed with an annular array of axially-extending teeth 64; whereas the outer end of the inner stem 61 is also formed with an annular array of axially-extending teeth 65. As will be described more particularly below, during the initial depression of push button 6, teeth 65 engage teeth 27 (Fig. 7) of the chuck unit 20 to prevent rotation of the chuck unit; while further depression of push button 6 causes teeth 64 to engage teeth 14 of the sleeve unit 10 to rotate the sleeve unit, relative to the chuck unit. During such rotation, the interengaging threads 18 of the sleeve unit 10, and 23 of the chuck unit 20, effect the axial displacement of the chuck unit with respect to the sleeve unit.

The manner of using the illustrated dental handpiece will be apparent for the above description. Thus, when a dental tool 5 is received within the chuck unit 20, as shown in Fig. 2, the spiral leaf spring 30, having its opposite ends coupled to the chuck unit 20 and sleeve unit 10, respectively, tends to rotate the chuck unit with respect to the sleeve unit. Their interengaging threads 23 and 18 urge the chuck unit such that its outer slitted end 21 is forced against the tapered inner surface 11 of the sleeve unit, and thereby is radially contracted to firmly hold the dental tool 5 within the chuck unit.

Accordingly, the dental handpiece may be used to perform the appropriate dental operation according to the dental tool 5 clamped thereto. Rotation of the dental tool is effected by compressed air introduced via conduit 8 and applied to the turbine blades 15, 16 of the sleeve unit 10. During the rotation of the sleeve unit 10, the chuck unit 12, including the dental tool 5, rotates therewith via the coupling effected between the chuck unit and sleeve unit by the spiral leaf spring 30.

Whenever it is desired to change the dental tool 5, push button 6 is depressed to release the dental tool in the following manner: During the initial depression of push button 6, teeth 65 on its inner stem 61 first engage teeth 24 at the end of the chuck unit 20 to hold the chuck unit against rotation. Further depression of push button 6 causes teeth 64 on its outer stem 60 to engage teeth 14 at the end of the sleeve unit 10 to effect a small manual rotation of the sleeve unit with respect to the chuck unit 20. This manual rotation is effected against the action of the spiral leaf spring 30, and thereby stresses the leaf spring.

During this manual rotation of sleeve unit 10 relative to chuck unit 20, their interengaging threads 18 and 23 effect the axial displacement of the chuck unit 20 inwardly with respect to the sleeve unit 10, thereby moving the open end 21 of the chuck unit away from the tapered inner surface 11 of the sleeve unit. This movement of the chuck unit permits the open end 21 of the chuck unit to radially expand, thereby releasing the dental tool 5 and permitting another dental tool to be applied to the dental handpiece.

As soon as push button 6 is released, the previously-stressed spiral spring 30 effects the rotation of the sleeve unit 10 relative to the chuck unit 20 in the opposite direction, thereby forcing the chuck unit back against the tapered inner surface 11 of the sleeve unit, to again firmly clamp the newly-introduced dental tool within the chuck unit.

Fig. 9 illustrates a modification, wherein the spring between the sleeve unit 10 and the chuck unit 20 is a helical spring, shown at 130, rather than a spiral spring as shown at 30 in the above-described embodiment. One end 131a of spring 130 is coupled to the sleeve unit 10, whereas the opposite 131b is coupled to the chuck unit 10. Fig. 9 also shows the interengaging threads 118 of the sleeve unit 110 and 123 of the chuck unit 120 which effects the axial displacement of the chuck unit to its releasing and clamping positions during the manual rotation of the sleeve unit by the depression and release of the push-button (61, Fig. 8).

In all other respects, the construction and operation of the modification illustrated in Fig. 9 are the same as described above with respect to Figs. 1-8.

While the invention has been described with respect to a dental handpiece, it will be appreciated that the invention, or various features thereof, could be implemented in other types of clamping devices, for example rod clamps, cable clamps, and the like. Many other variations, modifications and applications of the invention will be apparent.

## Claims

1. A clamping device for clamping a member to a housing, comprising:
a sleeve unit carried by said housing and having an open end formed with a tapered inner surface;
a chuck unit receivable within the open end of the sleeve unit, said chuck unit having an open end which is radially contractible for receiving and clamping said member;
said chuck unit being movable axially in one direction to a clamping position wherein its open end is contracted by engagement with said tapered inner surface of the sleeve unit, or in the opposite direction to a releasing position wherein its open end is moved away from said tapered inner surface of the sleeve unit;
said sleeve unit and chuck unit including interengaging elements such that rotation of the sleeve unit in one direction relative to the chuck unit moves the chuck unit to its clamping position, and rotation of the sleeve unit in the opposite direction relative to the chuck unit axially moves the chuck unit to its releasing position;
a spring normally urging said sleeve unit in said one rotary direction to thereby move said chuck unit to its clamping position;
and a manual operator effective, when manually actuated, to rotate said sleeve unit in the opposite direction to thereby move said chuck unit to its releasing position.

2. The clamping device according to Claim 1, wherein said manual operator is a push button which, in its normal position, permits said spring to urge said chuck unit to its clamping position, and which is depressible to rotate the sleeve unit in said opposite direction to thereby move said chuck unit to its releasing position.

3. The clamping device according to Claim 1, wherein said manual operator includes a first element engageable with said chuck unit upon the initial actuation of said manual operator to hold the chuck unit against rotation, and a second element engageable with said sleeve unit, upon the continued actuation of said manual operator, to rotate said sleeve unit, relative to the chuck unit, in said opposite direction to thereby move the chuck unit to said releasing position.

4. The clamping device according to Claim 1, wherein said spring is a spiral leaf spring normally urging said sleeve unit in said one rotary direction to thereby move said chuck unit to its clamping position.

5. The clamping device according to Claim 1, wherein said spring is a helical spring normally urging said sleeve unit in said one rotary direction to thereby move said chuck unit to its clamping position.

6. The clamping device according to Claim 1, wherein said sleeve unit and chuck unit are formed with interengaging threads such that rotation of the sleeve unit in said one direction relative to the chuck units axially moves the chuck unit to its clamping position, and rotation of the sleeve unit in the opposite direction relative to the chuck unit axially moves the chuck unit to its releasing position.

7. The clamping device according to Claim 1, wherein said push button includes a first group of teeth engageable with said chuck unit upon the initial actuation of said manual operator to hold the chuck unit against rotation, and a second group of teeth engageable with said sleeve unit, upon the continued actuation of said manual operator, to rotate said sleeve unit, relative to the chuck unit, in said opposite direction to thereby move the chuck unit to said releasing position.

8. The clamping device according to Claim 1, wherein said sleeve unit and chuck unit are both mounted on rotary bearings for rotation within said housing with said member clamped therein.

9. A dental handpiece including a clamping device according to Claim 8, wherein said chuck unit is constructed for releasably clamping a dental tool.

10. The dental handpiece according to Claim 9, wherein said spring has one end coupled to said rotatable sleeve unit, and an opposite end coupled to said rotatable chuck unit.

11. The dental handpiece according to Claim 9, wherein said spring is a spiral leaf spring having one end coupled to said rotatable sleeve unit, and an opposite end coupled to said chuck unit.

12. The dental handpiece according to Claim 9, wherein said spring is a helical spring having one end coupled to said rotatable sleeve unit, and an opposite end coupled to said chuck unit.

13. The dental handpiece according to Claim 9, wherein said sleeve unit includes turbine blades for rotating said sleeve unit together with said chuck unit and the dental tool when clamped therein.

14. The dental handpiece according to Claim 9, wherein said manual operator is a push button which, in its normal position, permits said spring to urge said chuck unit to its clamping position, and which is depressible to rotate the sleeve unit in said opposite direction to thereby move said chuck unit to its releasing position.

15. The dental handpiece according to Claim 9, wherein said manual operator includes a first element engageable with said chuck unit upon the initial actuation of said manual operator to hold the chuck unit against rotation, and a second element engageable with said sleeve unit, upon the continued actuation of said manual operator, to rotate said sleeve unit, relative to the chuck unit, in said opposite direction to thereby move the chuck unit to said releasing position.

16. The dental handpiece according to Claim 9, wherein said sleeve unit and chuck unit are formed with interengaging threads such that rotation of the sleeve unit in said one direction relative to the chuck units axially moves the chuck unit to its clamping position, and rotation of the sleeve unit in the opposite direction relative to the chuck unit axially moves the chuck unit to its releasing position.

17. The dental handpiece according to Claim 9, wherein said push button includes a first group of teeth engageable with said chuck unit upon the initial actuation of said manual operator to hold the chuck unit against rotation, and a second group of teeth engageable with said sleeve unit, upon the continued actuation of said manual operator, to rotate said sleeve unit, relative to the chuck unit, in said opposite direction to thereby move the chuck unit to said releasing position.
